# EUROPEAN PATENT APPLICATION

(11) **EP 4 588 797 A1**
(43) Date of publication of application: **23.07.2025**
(21) Application number: 24152246.5
(22) Date of filing: 16.01.2024
(51) Int. Cl.: B64D 11/06, B60N 2/80

(54) **FRONT SLEEP SUPPORT**

(71) Applicant: B/E Aerospace, Inc., Winston-Salem, NC 27105 (US)
(72) Inventor: LANDICHO, Noland Jay Jaca, 4301 Lucena City (PH); CASTILLO, Eugene Santos, 4027 Calamba (PH); LECHUGA, Jeffrey Gameng, 4025 Cabuyao (PH)
(74) Representative: Dehns

(57) **Abstract**

A front sleep support system for an airplane seat, the front sleep support system comprising: a headrest portion moveable between a stowed position in which the headrest portion is configured to support the back of a user's head and a deployed position in which the headrest portion is configured to support the front of a user's head; and a moveable arm configured to connect the headrest portion to a seat having a seat backrest and a seat base, the moveable arm defining a pivot point, wherein the headrest portion is configured to move pivotably about the pivot point between the stowed position and the deployed position, and wherein the moveable arm permits the headrest portion to move linearly relative to the seat base for deployment and/or stowing of the headrest portion between the stowed position and the deployed position.

## Description

### FIELD OF THE INVENTION

The invention relates to a front sleep support system.

### BACKGROUND

Commercial aircrafts are designed to maximise the use of available space and therefore arrange passenger seats in close proximity to each other, particularly in economy class. Economy class seats can usually be partially reclined to provide a more comfortable sleeping position but such a partially reclined seat does not provide an ideal sleeping position, particularly for people with underlying medical conditions such as orthopnoea. The reclining of seats can additionally cause a number of problems to other passengers such as reducing their legroom and personal space, limiting access to their tray tables and limiting their mobility to leave and return to their seats.

### SUMMARY

In a first aspect there is provided a front sleep support system for an airplane seat, the front sleep support system comprising:
a headrest portion moveable between a stowed position in which the headrest portion is configured to support the back of a user's head and a deployed position in which the headrest portion is configured to support the front of a user's head; and
a moveable arm configured to connect the headrest portion to a seat having a seat backrest and a seat base, the moveable arm defining a pivot point,
wherein the headrest portion is configured to move pivotably about the pivot point between the stowed position and the deployed position, and
wherein the moveable arm permits the headrest portion to move linearly relative to the seat base for deployment and/or stowing of the headrest portion between the stowed position and the deployed position.

The provision of a headrest portion that is moveable between a stowed position and a deployed position provides a user with more than one rest or sleep positions so that the user can choose the position that best suits their preferences or needs. Moreover, the headrest portion being pivotable between the stowed position and the deployed position and being linearly moveable for deployment and/or stowing allows a user to easily deploy or stow the headrest portion while remaining seated because the headrest portion can move over their head. The front sleep support system can therefore be used more easily by users having reduced mobility and without disturbing adjacent passengers.

In an example, the moveable arm comprises a locking mechanism configured to prevent pivotable movement of the headrest portion when the headrest portion is in the stowed position.

In an example, the headrest portion is deployable from the stowed position to a first intermediate position by moving linearly away from the seat base, the headrest portion in the first intermediate position being permitted by the locking mechanism to move pivotably.

In an example, the moveable arm permits the pivot point to move linearly relative to the seat base, the pivot point being moveable between an unlocked position in which the pivotable movement of the headrest portion is permitted and a locked position in which the pivot point is engaged by the locking mechanism.

In an example, the moveable arm permits the headrest portion to move linearly relative to the pivot point.

In an example, the headrest portion is deployable from the stowed position to the first intermediate position by moving linearly away from the pivot point.

In an example, the headrest portion is deployable to a second intermediate position following pivotable movement, the headrest portion being configured to move from the second intermediate position to the deployed position by moving linearly towards the pivot point.

In an example, the moveable arm comprises a telescopic mechanism that permits the linear movement of the headrest portion.

In an example, the moveable arm comprises:
a first arm portion secured to the headrest portion;
a second arm portion securable to the seat; and
a spine member that is at least partially received by at least one of the first arm portion and the second arm portion, the spine member being configured to guide the linear movement of the headrest portion.

In an example, at least one of the first arm portion and the second arm portion defines a cavity configured to receive at least part of the spine member.

In an example, each one of the first arm portion and the second arm portion defines a cavity configured to receive at least part of the spine member.

In an example, the moveable arm further comprises a moveable member that is pivotable relative to the second arm portion, the moveable member being receivable inside the second arm portion and the moveable member defining a cavity configured to receive at least part of the spine member.

In an example, the spine member has an I-shape defining a pair of overhangs at least one of its ends, the overhangs being configured to limit the linear movement of the first arm portion and the moveable portion relative to the spine member.

In an example, the spine member has an I-shape defining a pair of overhangs at each one of its ends, the overhangs being configured to limit the linear movement of the first arm portion and the moveable portion relative to the spine member.

In an example, the second arm portion is configured to be the locking mechanism by at least partially receiving the moveable member when the headrest portion is in the stowed position and preventing the pivotable movement of the moveable member.

In an example, the moveable arm further comprises an anchoring member arranged inside the second arm portion, the anchoring member being slidable inside the second arm portion and pivotably coupled to the moveable member, the coupling of the anchoring member and the moveable member defining the pivot point.

In an example, the moveable arm comprises a stop to maintain the headrest portion in the deployed position. The stop may be further configured to limit the pivotal movement of the moveable arm.

In an example, the second arm portion comprises a stop by way of a contact surface configured to abut a surface of the moveable member when the headrest portion is in the deployed position.

In an example, the moveable arm is configured to at least partially overlap with a side of a seat's backrest when the headrest portion is in the stowed position.

In an example, the front sleep support system comprises a seat having a seat base and a seat backrest.

In an example, the front sleep support system comprises a seat having a supplementary headrest portion, the supplementary headrest portion being configured to at least partially overlap with the headrest portion when the headrest portion is in the stowed position.

In an example, the headrest portion defines a support surface that is configured to contact the supplementary headrest portion when the headrest portion is in the stowed position.

In an example, at least one of the support surface and the supplementary headrest portion comprises an elastic or viscoelastic material. The support surface and the supplementary headrest portion may each comprise a memory foam material. The material may be a memory foam.

In an example, the front sleep support system comprises two moveable arms.

In a second aspect, there is a method for deploying a headrest portion of a front sleep support system according to any one of the preceding claims, the method comprising:
a first deployment step of moving the headrest portion linearly away from the seat base;
a second deployment step of pivotably moving the headrest portion forwards; and
a third deployment step of moving the headrest portion linearly towards the pivot point.

In an example, the first deployment step comprises moving the headrest position from the stowed position to a first intermediate position.

In an example, the first deployment step comprises moving the headrest portion linearly away from the pivot point and moving the pivot point linearly away from the seat base.

In an example, the second deployment step comprises pivotably moving the headrest portion forwards from the first intermediate position to a second intermediate position.

In an example, the second intermediate position is reached when the headrest portion is incapable of further pivotable movement.

In an example, the third deployment step comprises moving the headrest portion from the second intermediate position to the deployed position.

### BRIEF DESCRIPTION OF THE DRAWINGS

Various examples will now be described with reference to the accompanying drawings in which:
Figure 1a shows a side view of a typical aircraft seat arrangement in economy class;
Figure 1b shows the arrangement of Figure 1a in which a passenger has reclined their seat;
Figure 2a shows a front perspective view of a front sleep support system in combination with a seat, the front sleep support system having a headrest portion in a stowed position;
Figure 2b shows a front perspective view of the front sleep support system having the headrest portion in a first intermediate position;
Figure 2c shows a front perspective view of the front sleep support system having the headrest portion in a second intermediate position;
Figure 2d shows a front perspective view of the front sleep support system having the headrest portion in a deployed position;
Figure 3a shows a side view of the front sleep support system in the stowed position;
Figure 3b shows a cross-sectional view of a movable arm shown in the front sleep support system of Figure 3a;
Figure 4a shows a side view of the front sleep support system in the first intermediate position;
Figure 4b shows a cross-sectional view of the movable arm shown in the front sleep support system of Figure 4a;
Figure 5a shows a side view of the front sleep support system in the second intermediate position;
Figure 5b shows a cross-sectional view of the movable arm shown in the front sleep support system of Figure 5a;
Figure 6a shows a side view of the front sleep support system in the deployed position;
Figure 6b shows a cross-sectional view of the movable arm shown in the front sleep support system of Figure 6a;
Figure 7a shows a back view of the front sleep support system without the seat;
Figure 7b shows a back view of the front sleep support system in combination with the seat;
Figure 8a shows a method for deploying the headrest portion; and
Figure 8b shows a method for stowing the headrest portion.

The above figures may not be to scale and may show certain views and features in an exaggerated scale or in schematic form to improve for clarity.

### DETAILED DESCRIPTION

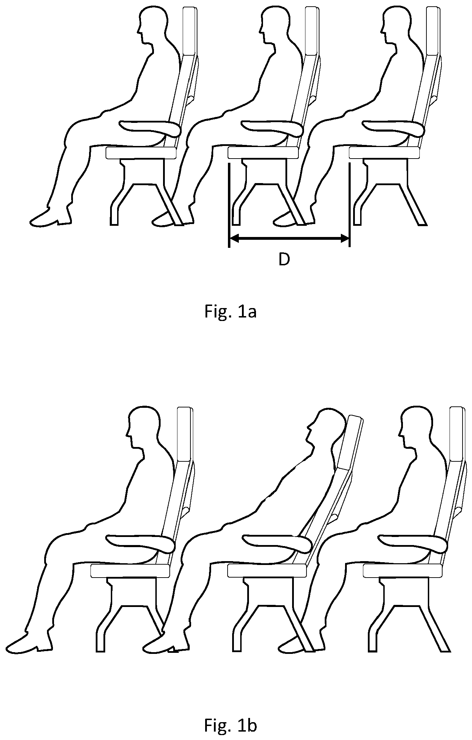

A typical aircraft seat arrangement for economy class is shown in Figure 1a. Seats are arranged in rows and limited space is provided between subsequent rows. In some aircrafts the distance "D" between rows, in this case measured by the distance between the front of the seats, may be as little as 71-74 cm. The personal space of passengers is further reduced when seats located in front of them are reclined, as shown in Figure 1b.

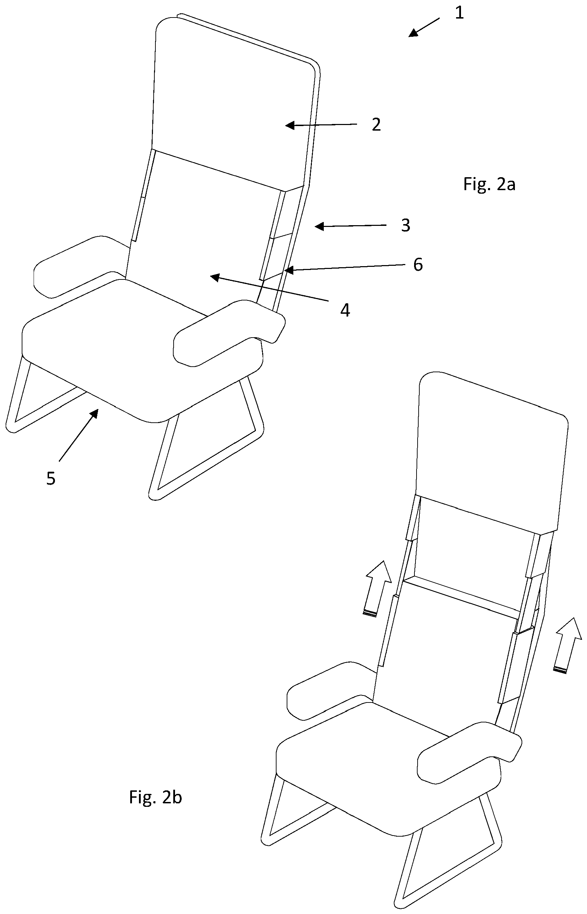

With reference to Figure 2a there is provided a front sleep support system 1 according to a first aspect of the disclosure. The front sleep support system 1 comprises a headrest portion 2 and a pair of moveable arms 3. The moveable arms 3 are positioned on opposing sides of the seat. In other examples, the front sleep support system may comprise a single moveable arm which may be positioned on either side of the headrest portion e.g. it may be provided on an aisle side of the seat or it may be provided on a window side of the seat.

Figure 2a shows the front sleep support system 1 in combination with a seat having a seat backrest 4 and a seat base 5. The front sleep support system 1 may be fixedly secured to the seat or may be releasably couplable to the seat. The angle between the seat backrest and the seat base may vary. It will be understood that the seat backrest is configured to, in use, support a user's back and that the seat base is configured to, in use, support a users' thighs. The seat backrest 4 is close to being orthogonal to the seat base 5 but is offset at an angle relative to the seat base 5 as shown in Figure 2a. A standard aircraft seat may for example comprise a 107-degree angle between the seat backrest and the seat base.

In some examples, the front sleep support system may comprise the seat. In such examples, the seat backrest may be capable of being reclined or may be rigidly secured to the seat base. In other examples, the front sleep support system may be connectable to a seat.

The headrest portion 2 is moveable between a stowed position and a deployed position. In the stowed position, shown in Figure 2a, the headrest portion 2 is configured to support the back of a user's head (e.g. supporting the user's head from behind the user), i.e. in an upright seated position. The headrest portion may comprise padding for supporting the users' head. In the deployed position the headrest portion 2 is configured to support the front of a user's head or a side of a user's head depending on the posture of the user (e.g. supporting the user's head from in front of the user). The headrest portion 2 in the deployed position may support a user's head directly or it may support a user's head indirectly, e.g. the user may fold their arms over the headrest portion 2 or use a pillow over the headrest portion 2.

The moveable arms 3 are configured to connect the headrest portion 2 to the seat and each define a pivot point 6, described in more detail below. Figure 2a shows the moveable arms 3 connecting the headrest portion 2 to the seat backrest 4. In other examples, the moveable arms may connect the headrest portion to the seat base.

Figure 2a shows the headrest in the stowed position. In this position the moveable arms 3 overlap with the sides of the seat backrest 4. However, in other examples the moveable arms may only partially overlap with the sides of the seat backrest when the headrest portion is in the stowed position. The moveable arms 3 are substantially flush with the sides of the seat backrest 4.

The moveable arms 3 preferably comprise a similar material to the seat backrest such that they blend in with sides of the seat backrest 4 in a visual and/or haptic sense. The moveable arms may be sized to have a depth substantially similar to the depth of the seat backrest, i.e. the depth referring to the direction extending from the front of the seat to the back of the seat.

The headrest portion 2 is configured to move pivotably about the pivot point 6 between the stowed position and the deployed position. In addition, the moveable arms 3 permit the headrest portion 2 to move linearly relative to the pivot point 6 for deploying the headrest portion 2 from the stowed position to the deployed position as shown in Figures 2a to 2d, and for stowing the headrest portion 2 from the deployed position to the stowed position. The linear movement of the headrest portion 2 relative to the pivot point 6 permits the distance between the headrest portion 2 and the seat base 5 to be varied for stowing/deploying the headrest portion 2.

Each moveable arm 3 comprises a locking mechanism (not shown in Figure 2a) configured to prevent pivotable movement of the headrest portion 2 when the headrest portion 2 is in the stowed position e.g. to prevent the headrest portion 2 from moving forwards. When the headrest portion 2 is in the stowed position the pivot point 6 is in a locked position in which the pivot point 6 is engaged by the locking mechanism.

Figure 2b shows the headrest portion in a first intermediate position. The headrest portion has been moved linearly away from the pivot point 6 and away from the seat base 5, i.e. extended upwardly. This increases the distance between the headrest portion 2 and the pivot point 6. It also increases the distance between the headrest portion 2 and the seat base 5. Preferably the moveable arms 3 permit the headrest portion 2 to move linearly such that the bottom surface of the headrest portion 2 is, in use, placed above the user's head. The moveable arms 3 may be configured to provide a linear movement that takes into account the average height of a user's head and a safety factor. The linear movement is additionally determined by the length or height of the seat backrest 4 of the seat to which the front sleep support system 1 is connected. For example, the maximum linear movement of the headrest portion may range from 25 to 35 cm.

The headrest portion 2 shown in Figure 2b is no longer in the stowed position and the pivotable movement of the headrest portion 2 is permitted. This is because the linear movement of the headrest portion 2 away from the stowed position causes the pivot point 6 to move linearly from the locked position to an unlocked position in which the pivot point 6 is not engaged by the locking mechanism. The arrangement of the locking mechanism and the pivot point 6 therefore advantageously provides a simple system for securely retaining the headrest portion 2 in the stowed position while allowing for a simple and easy deployment, i.e. transition to the deployed position.

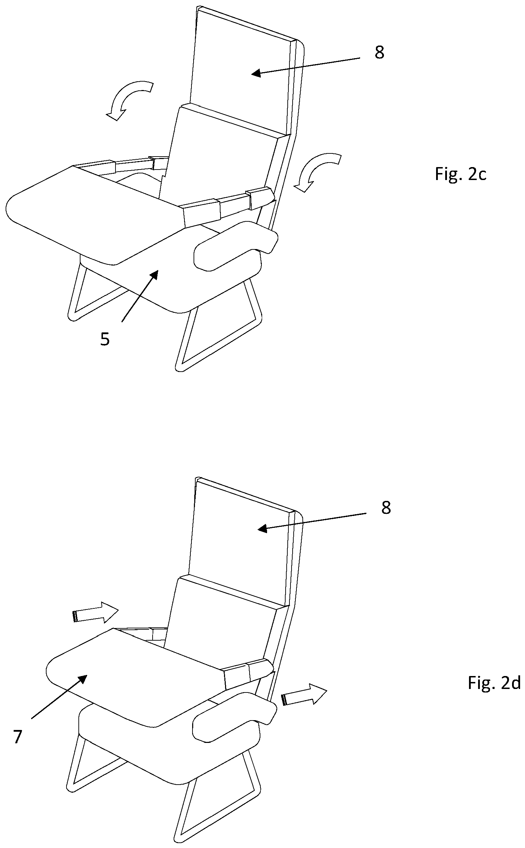

Figure 2c shows the headrest portion 2 in a second intermediate position. The headrest portion 2 has been moved pivotably towards the deployed position, i.e. forwards. The linear movement of the headrest portion 2 away from the pivot point 6 prior to the pivotable movement advantageously allows a user to carry out the pivotable movement without having to get up from their seat since the headrest portion 2 is configured to move above their head during deployment/stowing.

Figure 2d shows the headrest portion 2 in the deployed position following the linear movement of the headrest portion 2 towards the pivot point 6. The headrest portion 2 comprises a support surface 7 configured to support the user in the deployed position. The headrest portion 2 in the deployed position therefore allows a user to lean forward such that they can be in an orthopneic position, which is sometimes called the "tripod position". The orthopneic position maximises lung expansion and increases the ability to use accessory muscles during breathing, therefore helping relieve shortness of breath that is primarily caused by orthopnoea.

As shown in Figures 2c and 2d, the seat backrest 4 comprises a supplementary headrest portion 8. The support surface 7 is configured to contact the supplementary headrest portion 8 when the headrest portion 2 is in the stowed position.

The support surface 7 and/or the supplementary headrest portion 8 may comprise a padding material such as an elastically deformable material, a viscoelastic material or an inelastic material. Preferably the padding material may be a memory foam material. The provision of an elastic or viscoelastic padding material in the support surface 7 additionally allows for the support surface 7 to adjust its form to ensure a seamless fit with the supplementary headrest portion 8 and a smooth deployment of the headrest portion 2.

Figures 2c and 2d show the moveable arms 3 to be positioned at a particular angle when the headrest portion 2 is in the deployed position for illustrative purposes only. The headrest portion 2 may be configured to move pivotably by any suitable angle. In an example, the headrest portion may be pivotable to be at an angle ranging from 35 to 55 degrees relative to a horizontal surface such as the aircraft floor.

When the front sleep support system 1 comprises the seat or is used in combination with the seat, a user is provided support in multiple resting or sleep positions. This arrangement therefore allows for the user to alternate between positions without having to transition the headrest portion 2 between the stowed position and the deployed position.

In further examples, the headrest portion may be pivotable relative to the moveable arms for increased user comfort. The headrest portion may be pivotable by up to 45 degrees relative to the moveable arms, i.e. relative to the plane defined by the lengths of the two moveable arms.

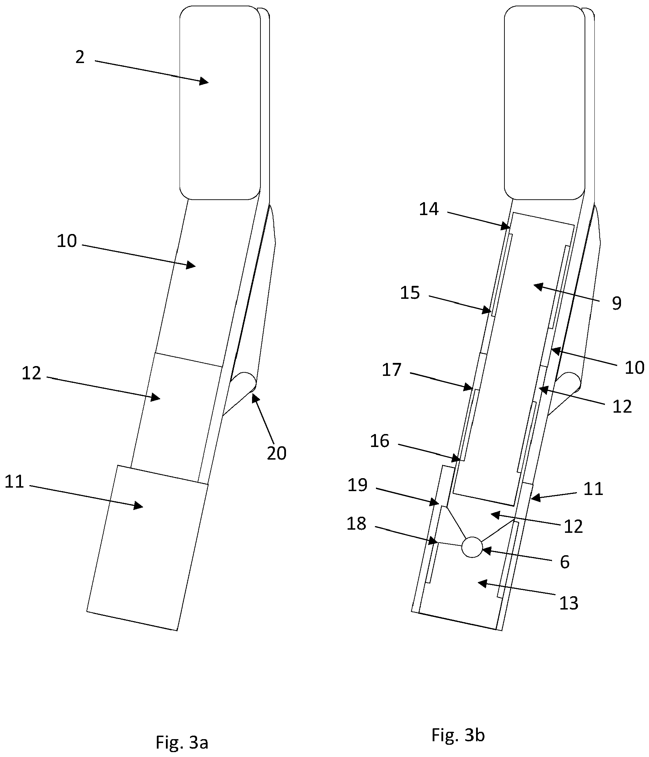

Figures 3a to 6b show a side view of the front sleep support system 1 in which only one moveable arm 3 is visible. References to the moveable arm 3 in relation to the figures should therefore be understood to refer to each moveable arm 3.

The front sleep support system 1 is shown in more detail in Figures 3a and 3b. The moveable arm 3 comprises a spine member 9 (not shown in Figure 3a) configured to guide the linear movement of the headrest portion 2. In a preferred example, the spine member 9 is made of a low-density material, more preferably a low-density metal such as aluminium. The moveable arm 3 further comprises a first arm portion 10 that is secured to the headrest portion 2 and configured to receive part of the spine member 9. The moveable arm 3 additionally comprises a second arm portion 11 that is secured to the seat backrest 4 and configured to receive part of the spine member 9.

The moveable arm 3 further comprises a moveable member 12 that is receivable in the second arm portion 11 and that is configured to receive part of the spine member 9. The moveable arm 3 also comprises an anchoring member 13 that is pivotably coupled to the moveable member 12 and that is slidable inside the second arm portion 11.

In other examples, the spine member may be received only by the moveable member and not by the second arm portion.

The coupling of the moveable member 12 and the anchoring member 13 defines the pivot point 6. As shown in Figure 3b, when the headrest portion 2 is in the stowed position, the pivot point 6 and part of the moveable member 12 are received in the second arm portion 11. The sides of the moveable member 12 are therefore constrained by a corresponding pair of inner walls of the second arm portion 11, thereby preventing pivotable movement while permitting linear movement of the moveable member 12 and, consequently, of the moveable arm 3. The second arm portion 11 acts as the locking mechanism. More specifically, it is the combination of the second arm portion 11, the moveable member 12, and the anchoring member that constitute the locking mechanism.

In alternative examples the moveable arm may comprise any other suitable arrangements such as components using rollers, rails, a gas spring or a telescopic mechanism to enable linear movement and components using articulated members or additional pivotable couplings to enable pivotable movement.

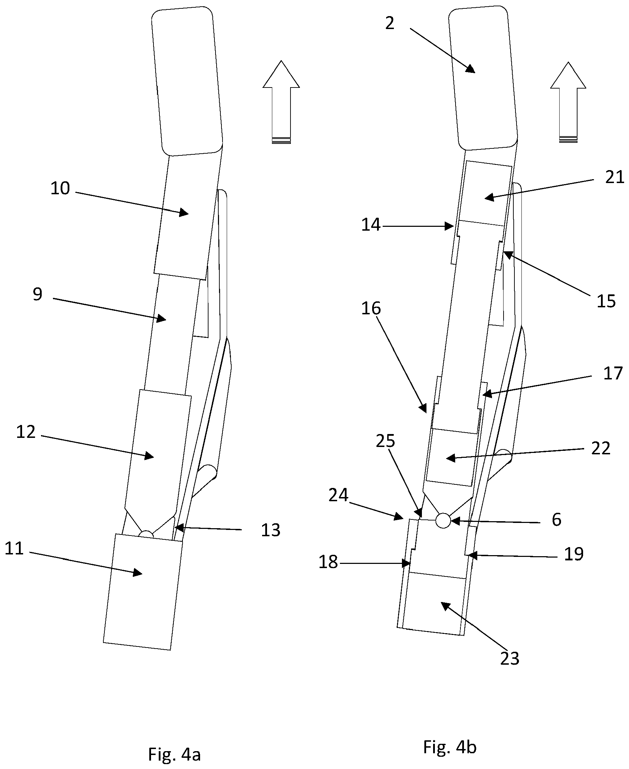

Figure 3b also shows that the spine member 9 has an I-shape comprising a first pair of spine member overhangs 14 that are received in the first arm portion 10 and, as will be explained in relation to Figure 4b, are configured to abut a first limiting surface 15 formed in the first arm portion 10. The spine member 9 comprises a second pair of spine member overhangs 16 that are received in the moveable member 12 and are configured to abut a second limiting surface 17 formed in the moveable member 12. Similarly, the anchoring member 13 comprises a pair of anchoring member overhangs 18 that are configured to abut a third limiting surface 19 formed in the second arm portion 11.

Figures 3a and 3b additionally show the seat backrest 4 to comprise a fold-out tray 20.

The relationship between the components of the moveable arm 3 is best observed in Figures 4a to 5b. Figure 4b shows that the first arm portion 10 comprises a first cavity 21 configured to receive part of the spine member 9, the moveable member 12 comprises a second cavity 22 configured to receive part of the spine member 9 and the second arm portion 11 comprises a third cavity 23 configured to receive part of the moveable member 12. In other examples, the first arm portion or the second arm portion may not comprise a cavity.

When the headrest portion 2 is moved linearly away from the pivot point 6 and the seat base 5, as shown in Figures 4a and 4b, the first arm portion 10 is moved together with the headrest portion 2. The first arm portion 10 slides relative to the spine member 9 along the length of the first cavity 21 until the first pair of spine member overhangs 14 abut the first limiting surface 15 which limits their relative movement. Once the relative movement of the first arm portion 10 and the spine member 9 is no longer possible, further linear movement of the headrest portion 2 away from the pivot point 6 and the seat base 5 is transferred to the spine member 9, causing it to slide inside the second cavity 22 until the second pair of spine member overhangs 16 abut second limiting surface 17 which limits their relative movement. Once the relative movement of the spine member 9 and the moveable member 12 is no longer possible, further linear movement of the headrest portion 2 away from the pivot point 6 and the seat base 5 is transferred to the moveable member 12, causing it to slide inside the third cavity 23 until the pair of anchoring member overhangs 18 abuts third limiting surface 19 which limits the relative movement of the moveable member 12 and the second arm portion 11 and results in the arrangement shown in Figure 4b. As such, the moveable arm 3 permits the headrest portion 2 to move linearly relative to the seat base 5 by linear movement of the headrest portion 2 relative to the pivot point 6 and by linear movement of the pivot point 6.

The sequence relative movements described above is only one example and may happen in a different order.

When the headrest portion 2 is in the position shown in Figures 4a and 4b the moveable member 12 is not received inside the second arm portion 11 and the pivot point 6 is partly outside of the second arm portion 11. The pivot point 6 is in the unlocked position and the pivotable movement of the moveable member 12 is permitted because the sides of the moveable member 12 are no longer constrained by the internal walls of the second arm portion 11.

Figure 4b additionally shows that the second arm portion 11 comprises a contact surface 24 configured to abut a surface of the moveable member 12 when the headrest portion 2 is in the deployed position. The angle defined between the contact surface 24 and the corresponding surface of the moveable member 12 defines the pivotable range of motion of the moveable arm 3 and the headrest portion 2. The anchoring member 13 comprises a supplementary contact surface 25 that is aligned with the contact surface 24 in order to allow for the pivotable movement of the moveable member 12.

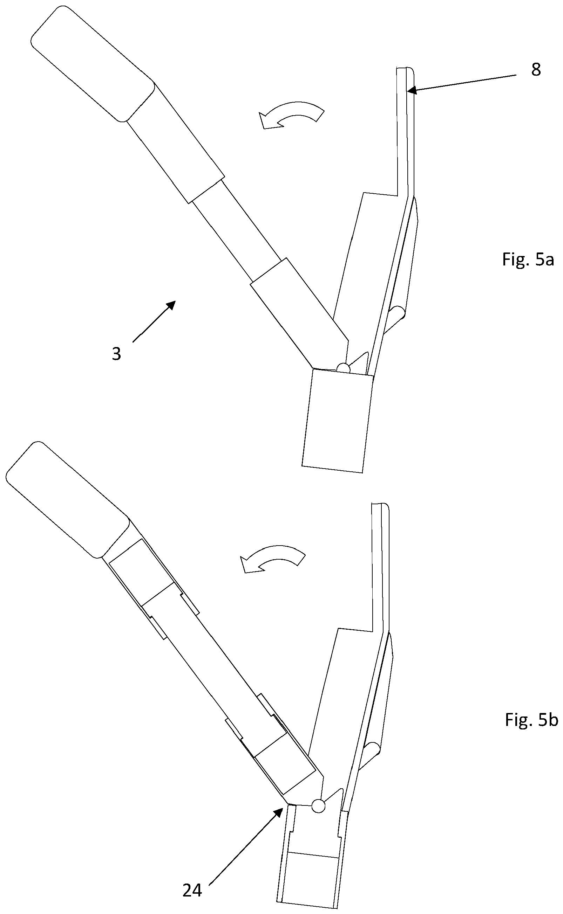

Figures 5a and 5b show the moveable arm 3 and headrest portion 2 in a position following full pivotable movement. The contact surface 24 and supplementary contact surface 25 are in abutment with the corresponding surface of the moveable member 12 thereby preventing further pivotable movement.

In other examples the pivotable movement of the headrest portion and the moveable arm may be controlled in any other suitable way. The front sleep support system may alternatively or additionally use connecting members, such as strings or ropes, biasing members, such as springs, and gear systems such as ones using ratchet gears for pivotable movement control. The moveable arm may comprise an alternative stop different from the contact surface.

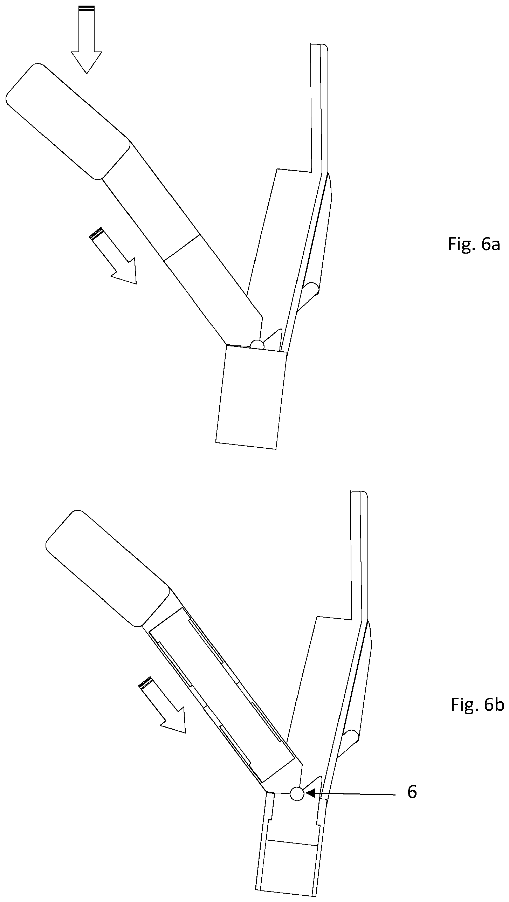

Figures 6a and 6b show the front sleep support system 1 in the deployed position. After the pivotable movement is completed, the headrest portion 2 can be manually lowered by the user. Alternatively, the headrest portion 2 can be released by the user and the headrest portion 2 will move downwardly by the effect of gravity.

The moveable arm may comprise a dampening member such as a spring, e.g. a gas spring, or a fluid damper for controlling the downward movement of the headrest portion and the spine member.

Whether the downward motion of the headrest portion 2 is manual or automatic, it causes the headrest portion 2 and spine member 9 to move towards the pivot point 6 such that the front sleep support system 1 collapses or folds into a more compact configuration. The spine member 9 is no longer exposed and the user can use the front sleep support system 1 more comfortably.

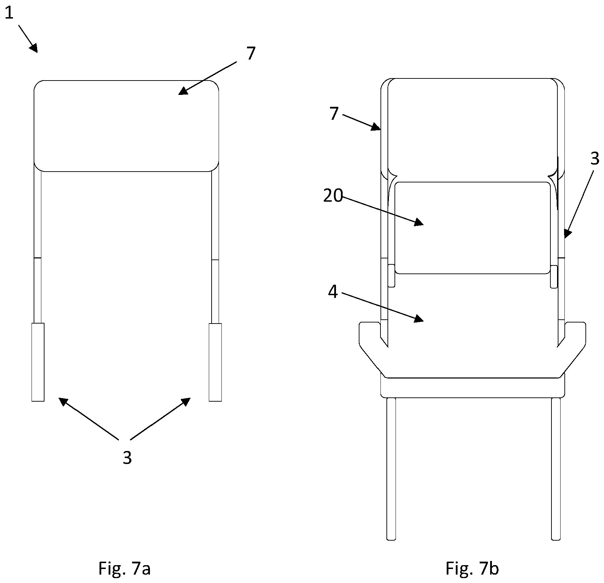

Figures 7a and 7b provide more context by showing, respectively, the front sleep support system 1 separate from and in combination with the seat.

The support surface 7 can be seen fully in Figure 7a and only partially in Figure 7b. Figures 7a and 7b show that the moveable arms 3 are positioned at the edges of the lower surface of the headrest portion 2 and are substantially flush with the sides of the seat backrest 4 without interfering with the seat backrest 4 or the fold-out tray 20. The design of the front sleep support system 1 therefore achieves a balance of maximising space between the moveable arms 3 for user comfort while providing a compact arrangement. The design of the front sleep support system 1 additionally avoids interference between the moveable arms 3 and the seat backrest 4 and therefore facilitates an easy grip on the headrest portion 2 during its deployment and stowing.

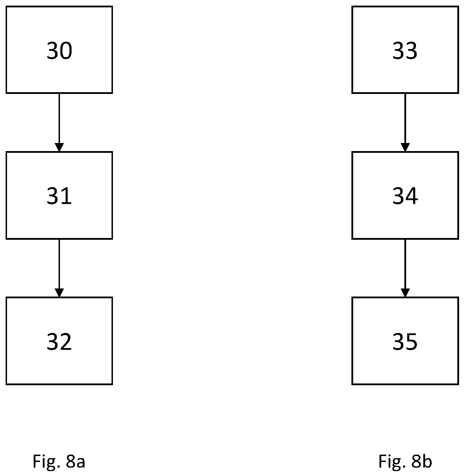

As shown in Figure 8a, a method for deployment of the headrest portion 2 comprises a first deployment step 30 of moving the headrest portion 2 linearly away from the seat base 5; a second deployment step 31 of pivotably moving the headrest portion 2 forwards (i.e. away from the seat backrest 5); and a third deployment step 32 of moving the headrest portion 2 linearly towards the pivot point 6.

In the first deployment step 30, in order to move the headrest portion 2 linearly away from the seat base 5, the moveable arm permits the headrest portion 2 to move linearly away from the pivot point 6. Additionally, in the first deployment step 30, in order to move the headrest portion 2 linearly away from the seat base 5, the pivot point 6 moves linearly, which causes the moveable arm 3 to move linearly away from the seat base 5. This takes the headrest portion 2 away from the seat base 5 to a first intermediate position. The second deployment step 31 further comprises pivotably moving the headrest portion 2 forwards from the first intermediate position to the second intermediate position. The second intermediate position is reached when the headrest portion 2 is incapable of further pivotable movement. The third deployment step 32 comprises moving the headrest portion 2 either manually or by the effect of gravity from the second intermediate position to the deployed position.

Preferably the first deployment step 30, second deployment step 31 and third deployment step 32 are carried out in consecutive order. However, in other examples, the method of deployment may be used carrying out the above steps in a different order and/or simultaneously, e.g. the headrest portion may not be required to reach the second intermediate position before it is linearly moved towards the pivot point.

A method for stowing the headrest portion is shown in Figure 8b and is effectively the reverse of the method for deploying the headrest portion 2. The method for stowing the headrest portion 2 therefore comprises a first stowing step 33 of moving the headrest portion 2 linearly away from the pivot point 6; a second stowing step 34 of pivotably moving the headrest portion 2; and a third stowing step 35 of moving the headrest portion 2 linearly towards the pivot point 6 and the seat base 5.

The first stowing step 33 comprises moving the headrest portion 2 from the deployed position to the second intermediate position by moving linearly away from the pivot point 6. The second stowing step 34 comprises pivotably moving the headrest portion 2 from the second intermediate position to the first intermediate position, i.e. backwards (towards the seat backrest 5). The third stowing step 35 comprises linearly moving the headrest portion 2 from the first intermediate position to the stowed position either manually or by the effect of gravity.

The deployment method and the stowing method are preferably manual methods. However, in other examples the front sleep support system may comprise an electronic and/or other motion systems for automating the deployment and stowing of the headrest portion.

Various aspects of the apparatus and methods disclosed in the various embodiments may be used alone, in combination, or in a variety of arrangements not specifically discussed in the embodiments described in the foregoing, and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A front sleep support system for an airplane seat, the front sleep support system comprising:
a headrest portion moveable between a stowed position in which the headrest portion is configured to support the back of a user's head and a deployed position in which the headrest portion is configured to support the front of a user's head; and
a moveable arm configured to connect the headrest portion to a seat having a seat backrest and a seat base, the moveable arm defining a pivot point,
wherein the headrest portion is configured to move pivotably about the pivot point between the stowed position and the deployed position, and
wherein the moveable arm permits the headrest portion to move linearly relative to the seat base for deployment and/or stowing of the headrest portion between the stowed position and the deployed position.

2. A front sleep support system according to Claim 1, wherein the moveable arm comprises a locking mechanism configured to prevent pivotable movement of the headrest portion when the headrest portion is in the stowed position.

3. A front sleep support system according to Claim 2, wherein the headrest portion is deployable from the stowed position to a first intermediate position by moving linearly away from the seat base, the headrest portion in the first intermediate position being permitted by the locking mechanism to move pivotably.

4. A front sleep support system according to Claim 2 or Claim 3, wherein the moveable arm permits the pivot point to move linearly relative to the seat base, the pivot point being moveable between an unlocked position in which the pivotable movement of the headrest portion is permitted and a locked position in which the pivot point is engaged by the locking mechanism.

5. A front sleep support system according to any one of the preceding claims, wherein the moveable arm permits the headrest portion to move linearly relative to the pivot point.

6. A front sleep support system according to any one of the preceding claims, wherein the headrest portion is deployable to a second intermediate position following pivotable movement, the headrest portion being configured to move from the second intermediate position to the deployed position by moving linearly towards the pivot point.

7. A front sleep support system according to any one of the preceding claims, wherein the moveable arm comprises a telescopic mechanism that permits the linear movement of the headrest portion.

8. A front sleep support system according to any one of the preceding claims, wherein the moveable arm comprises:
a first arm portion secured to the headrest portion;
a second arm portion securable to the seat; and
a spine member that is at least partially received by at least one of the first arm portion and the second arm portion, the spine member being configured to guide the linear movement of the headrest portion.

9. A front sleep support system according to Claim 8, wherein at least one of the first arm portion and the second arm portion defines a cavity configured to receive at least part of the spine member.

10. A front sleep support system according to Claim 8 or Claim 9, wherein the moveable arm further comprises a moveable member that is pivotable relative to the second arm portion, the moveable member being receivable inside the second arm portion and the moveable member defining a cavity configured to receive at least part of the spine member.

11. A front sleep support system according to Claim 10, wherein the second arm portion is configured to be the locking mechanism by at least partially receiving the moveable member when the headrest portion is in the stowed position and preventing the pivotable movement of the moveable member.

12. A front sleep support system according to any one of the preceding claims, wherein the moveable arm is configured to at least partially overlap with a side of a seat's backrest when the headrest portion is in the stowed position.

13. A front sleep support system according to any one of the preceding claims, further comprising a seat having a supplementary headrest portion, the supplementary headrest portion being configured to at least partially overlap with the headrest portion when the headrest portion is in the stowed position.

14. A front sleep support system according to any one of the preceding claims, wherein the front sleep support system comprises two moveable arms.

15. A method for deploying a headrest portion of a front sleep support system according to any one of the preceding claims, the method comprising:
a first deployment step of moving the headrest portion linearly away from the seat base;
a second deployment step of pivotably moving the headrest portion forwards; and
a third deployment step of moving the headrest portion linearly towards the pivot point.
